Europäisches Patentamt

**European Patent Office**

**Office européen des brevets**

(11) Veröffentlichungsnummer: **0 064 276**
**B1**

(12) # EUROPÄISCHE PATENTSCHRIFT

(45) Veröffentlichungstag der Patentschrift:
10.10.84

(51) Int. Cl.³: **B 23 C 3/06**

(21) Anmeldenummer: **82103642.3**

(22) Anmeldetag: **28.04.82**

(54) **Wirbelmaschine zur Bearbeitung von Kurbelwellen.**

(30) Priorität: **29.04.81 DE 3117030**

(43) Veröffentlichungstag der Anmeldung:
**10.11.82 Patentblatt 82/45**

(45) Bekanntmachung des Hinweises auf die Patenterteilung:
**10.10.84 Patentblatt 84/41**

(84) Benannte Vertragsstaaten:
**AT DE FR GB IT**

(56) Entgegenhaltungen:
**DE - A - 3 012 176**
**FR - A - 2 331 411**
**US - A - 2 780 895**
**US - A - 3 727 494**

**Dörrier-Prospket Nr. 6508, Seite 13**

(73) Patentinhaber: **Oerlikon-Boehringer GmbH, Stuttgarter Strasse 50 Postfach 220, D-7320 Göppingen (DE)**

(72) Erfinder: **Berbalk, Hermann, Liebensteinstrasse 7, D-7320 Göppingen (DE)**

(74) Vertreter: **Vogeser, Werner, Dipl.-Ing. et al, Patentanwälte Hansmann & Vogeser Albert-Rosshaupter-Strasse 65, D-8000 München 70 (DE)**

**Beschreibung**

Die Erfindung betrifft eine Wirbelmaschine entsprechend dem Oberbegriff des Anspruchs 1.

Es ist bekannt, auf sog. Dörries-Drehmaschinen (Dörries-Prospekt Nr. 6508, Seite 13, Bearbeitungsbeispiel 3) alle Hub- und Mittellager von zwei in gleicher Achse liegenden Kurbelwellen zu bearbeiten. Es werden dabei vorzugsweise kürzere Kurbelwellen, z. B. 3hübige Kurbelwellen bearbeitet. Bei diesen Maschinen ist eine Vorbearbeitung der Kurbelwellen am Flansch und am Endzapfen notwendig, da hier die Spannung zur Drehmitnahme erfolgt. Die Bearbeitung der Hub- und Mittellager erfolgt dann in einer einzigen Aufspannung gleichzeitig.

Auch sind Kurbelwellen-Drehmaschinen zur Bearbeitung kürzerer Kurbelwellen, z. B. von 3hübigen Kurbelwellen bekannt, auf denen Kurbelwellen paarweise und in gleicher Achse liegend gespannt bearbeitet werden. Bei diesen Maschinen können paarweise gleichliegende Hublager bearbeitet werden.

Ferner sind Fräsmaschinen bekannt, die sowohl nach dem Außen- als auch nach dem Innenfräsverfahren arbeiten und auf denen die Mittellager von Kurbelwellen in einer einzigen Aufspannung bearbeitet werden können.

Die erwähnten Kurbelwellen-Drehmaschinen entsprechen in ihrer Leistung nicht mehr den heutigen Anforderungen. Bei Außenfräsmaschinen ist es zwar möglich, eine Kurbelwelle an mehreren Stellen abzustützen, jedoch ist diese Abstützung zu Beginn der Bearbeitung infolge der Unrundheit der noch unbearbeiteten Kurbelwelle und der erforderlichen Drehung der Kurbelwelle nicht starr.

Dem Außenfräsverfahren ist das Wirbel- bzw. Innenfräsverfahren wegen der hohen Standzeit und der guten Bearbeitungsergebnisse überlegen, jedoch ergeben sich Schwierigkeiten beim Aufspannen der Kurbelwellen, vor allem dann, wenn mehrere Lager gleichzeitig bearbeitet werden sollen. Dabei wirkt sich der volle Fräsereinsatz auf die labile Kurbelwelle und auch gegenseitige Beeinflussung der beiden Fräswerkzeugeinheiten auf deren Standzeit und auch auf das Bearbeitungsergebnis negativ aus.

Aus der US-A-372 749 ist eine Maschine zur Bearbeitung von Kurbelwellen bekannt, die mehrere aufeinanderfolgende Bearbeitungsstationen aufweist, in denen die Kurbelwellen gleichachsig aufgenommen aufeinanderfolgend bearbeitet werden. Die Einspannung der Kurbelwellen erfolgt nur an einem Ende, so daß eine genaue Bearbeitung insbesondere bei langen Kurbelwellen erfolgt nur an einem Ende, so daß eine genaue Bearbeitung insbesondere bei langen Kurbelwellen erschwert wird und außerdem aufwendige Werkstückträger erforderlich sind.

Aus der FR-A-2 331 411 ist schließlich eine Kurbelwellenfräsmaschine bekannt, auf der wegen der erforderlichen Mittenabstützung nur relativ kurze Kurbelwellen bearbeitet werden können. Bei längeren Kurbelwellen ist eine derartige Abstützung nicht ausreichend.

Der Erfindung liegt die Aufgabe zugrunde, die Wirbelmaschine der eingangs genannten Art so auszubilden, daß sie bei Anwendung des Wirbel- bzw. Innenfräsverfahrens für die Bearbeitung der Rotationsflächen, insbes. der Mittellager von langen Kurbelwellen einsetzbar ist.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Die Erfindung beruht auf der Erkenntnis, daß es bei langen Kurbelwellen, insb. bei mehr als 3hübigen Kurbelwellen ausreicht, für die üblicherweise zwischen zwei Spindelstöcken eingespannte Kurbelwelle eine erste und wenigstens eine zweite Einspannstelle vorzusehen, um eine ausreichend ruhige und stabile Lage der Kurbelwelle bei der Bearbeitung zu erreichen. Die erste Lagerstelle befindet sich vorzugsweise an der Seitenwange bzw. den Seitenwangen eines Hublagers, das zu diesem Zweck Anfräsungen aufweist, also vorbearbeitet ist, so daß sich durch diese Anfräsungen bereits eine genaue Lage der Kurbelwelle ergibt. Die zweite Einspannstelle kann dann an einem Mittellager liegen, daß in der einen Bearbeitungsstation unbearbeitet ist. In der anderen Bearbeitungsstation kann dann hierfür ein bearbeitetes Mittellager verwendet werden, so daß sich dadurch die Einspannvorrichtung vereinfacht.

Die vorgeschlagene Maschine, bei der in üblicher Weise zwei Kurbelwellen gleichzeitig bearbeitet werden, jedoch nach einer Teilbearbeitung die eine Kurbelwelle z. B. mittels eines Doppelgreifers von der einen in die andere Bearbeitungsstation übertragen wird, ermöglicht gerade durch die Aufteilung der Gesamtbearbeitung z. B. der Mittellager einer Kurbelwelle die Anwendung des vorteilhaften Wirbel- bzw. Innenfräsverfahrens.

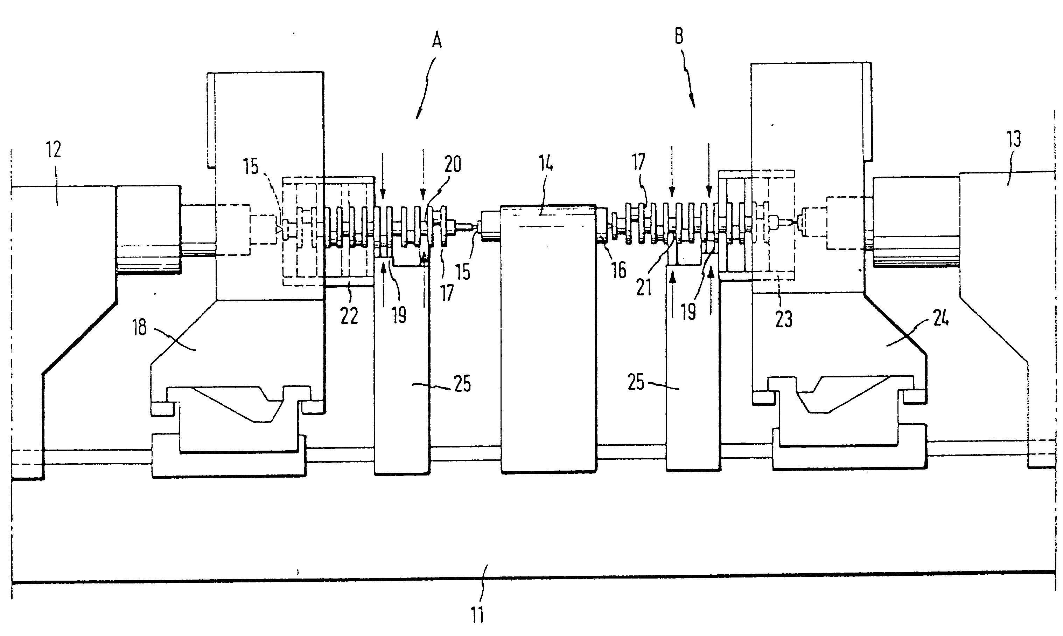

Die Erfindung wird nachstehend anhand der Zeichnung beispielsweise erläutert, die eine Vorderansicht einer schematisch dargestellten Kurbelwellen-Wirbelmaschine mit getrennter Bearbeitungsfolge zeigt.

Die Wirbelmaschine hat zwei Bearbeitungsstationen A und B zur Aufnahme von zwei Kurbelwellen 17, die zwischen zwei äußeren Spindelstöcken 12, 13 und einem mittleren Spindelstock 14 in üblicher Weise mittels Körnerspitzen und Spannfutter 16 einspannbar sind.

Jede Bearbeitungsstation A, B hat eine Bearbeitungseinheit 18 bzw. 24 mit einem Fräsersatz 22 bzw. 23 sowie eine Einspannvorrichtung 25.

Die Spindelstöcke, die Bearbeitungseinheiten und die Einspannvorrichtungen ruhen auf einem Maschinenbett 11.

Die gezeigte Wirbelmaschine ist zur Bearbeitung der Kurbelwellenmittellager ausgelegt. In jeder Bearbeitungsstation A, B befindet sich eine 6hübige Kurbelwelle. Jede Bearbeitungseinheit 18 bzw. 24 hat einen Fräsersatz 22 bzw. 23 mit je drei Fräswerkzeugen.

In der Bearbeitungsstation A werden die von links aus gesehenen ersten drei Mittellager und die zugehörigen Flanschpartien bearbeitet. Mittels der Einspannvorrichtung 25 wird die Kurbelwelle an einer ersten Einspannstelle 19 eingespannt, die sich üblicherweise an den beiden Seitenwangen eines Hublagers befindet. Die Seitenwangen haben drei nicht gezeigte Anfräsungen, so daß die Kurbelwelle an der ersten Einspannstelle 19 an drei Punkten eingespannt werden kann.

Eine zweite Einspannstelle 20 der Einspannvorrichtung 25 befindet sich von rechts gesehen am zweiten Mittellager der Kurbelwelle; bei diesem Mittellager handelt es sich um ein nicht bearbeitetes Lager.

Die Bearbeitungsstation B ist in der gleichen Weise ausgebildet wie die Station A, jedoch ist die Einspannvorrichtung 25 bezüglich des mittleren Spindelstocks spiegelbildlich zu der Einspannvorrichtung 25 der Station A angeordnet, so daß die erste Einspannstelle 19 an den gleichen Seitenwangen wie in der Station A liegt, jedoch die zweite Einspannstelle 21 an einem bereits bearbeiteten Mittellager.

Die Bearbeitungsfolge der Maschine ist derart, daß nach der Bearbeitung der drei Mittellager und der Flanschpartie mittels des Fräsersatzes 22 in der Station A die teilweise bearbeitete Kurbelwelle entfernt, die nächste, unbearbeitete Kurbelwelle eingespannt, gleichzeitig oder zeitlich versetzt die in der Station B befindliche Kurbelwelle, deren sämtliche Mittellager einschließlich des Endzapfens nun bearbeitet sind, entfernt und die Kurbelwelle aus der Station A in der Station B eingespannt wird. Bei jedem Bearbeitungsvorgang mittels der Fräsersätze 22 und 23 werden somit sämtliche Mittellager einschließlich Flansch- und Endzapfenpartie einer Kurbelwelle bearbeitet.

Durch die Anwendung der beiden Einspannstellen am unbearbeiteten Teil einer Kurbelwelle ist es möglich, die Mittellager auch langer Kurbelwellen, d. h. wie im vorliegenden Falle 6hübige Kurbelwellen, mittels Wirbelfräswerkzeugen zu bearbeiten.

Der Einsatz der gezeigten Maschine ist jedoch nicht auf die Bearbeitung von langen Kurbelwellen beschränkt. So können auch kürzere Kurbelwellen, z. B. 2- oder 3hübige Kurbelwellen bearbeitet werden. In diesem Falle sind die Einspannvorrichtungen 25 außer Betrieb, und der mittlere Reitstock 14, die Bearbeitungsstation B und der Spindelstock 13 werden entsprechend der Länge einer solchen kurzen Kurbelwelle auf dem Maschinenbett 11 verstellt.

Mit der gezeigten Maschine können nicht nur die Mittellager von Kurbelwellen, sondern auch deren Hublager bearbeitet werden. Anstelle des Fräsersatzes zur Bearbeitung von Mittellagern werden dann Einzelfräser verwendet. In diesem Falle hat das Wirbelgerät selbst eine Einspannvorrichtung, um die Kurbelwelle z. B. an dem bereits bearbeiteten, nächstliegenden Mittellager einzuspannen. Der Einsatz der Maschine ist besonders bei der Bearbeitung der Hublager von 3- bzw. 5hübigen Kurbelwellen von Vorteil. So muß bei einer üblichen, zwei getrennt arbeitende Bearbeitungsstationen aufweisenden Maschine zwei- bzw. dreimal die Bearbeitungszeit eines Hubzapfens angesetzt werden, um eine Kurbelwelle an den Hublagern zu bearbeiten.

Erfolgt hingegen die Bearbeitung einer 3- bzw. 5hübigen Kurbelwelle komplett im Schrittverfahren, so ist drei- bzw. fünfmal die Bearbeitungszeit eines Hubzapfens anzusetzen, um je zwei Kurbelwellen an den Hublagern zu bearbeiten.

Bei der Bearbeitung einer 4hübigen Kurbelwelle, deren Kurbellager um 180° versetzt sind, kann derart vorgegangen werden, daß in der Bearbeitungsstation A die beiden äußeren Hublager mittels eines Fräsersatzes und in der Bearbeitungsstation B die beiden inneren Hublager mittels eines Fräsersatzes bearbeitet werden. Dies bedeutet eine erhebliche Zeitersparnis gegenüber der bisherigen paarweisen Hublagerbearbeitung auf den üblichen Maschinen mit zwei getrennt arbeitenden Bearbeitungsstationen.

## Patentansprüche

1. Wirbelmaschine zur Bearbeitung von konzentrisch und/oder exzentrisch zur Achse von langen, insbes. mehr als 3hübigen Kurbelwellen (17) liegenden Lagern, insbes. deren Mittellager, die zwei Bearbeitungsstationen (A, B) aufweist, in denen zwei gleichachsig aufgenommene und eingespannte Kurbelwellen bearbeitet werden, dadurch gekennzeichnet, daß in der einen Bearbeitungsstation (A) ein Teil einer Kurbelwelle (17) und in der anderen (B) anschließend zeitlich um einen Zeitbetrag im Arbeitstakt versetzt der restliche Teil dieser Kurbelwelle bearbeitet wird, während gleichzeitig in der einen Station (A) die nächstfolgende Kurbelwelle bearbeitet wird, und daß jede Kurbelwelle (17) zusätzlich zur Aufnahme an ihren Enden an einer ersten Einspannstelle (19) und zusätzlich an wenigstens einer zweiten Einspannstelle (20, 21) eingespannt ist.

2. Maschine nach Anspruch 1, dadurch gekennzeichnet, daß die erste Einspannstelle (19) in beiden Bearbeitungsstationen (A, B) zur Spannung der Kurbelwelle verwendet wird und vorzugsweise wenigstens an einer Seitenwange eines Hublagers liegt.

3. Maschine nach Anspruch 2, dadurch gekennzeichnet, daß die Seitenwange Anfräsungen zur Justierung der Kurbelwelle (17) aufweist.

4. Maschine nach einem der Ansprüche 1 bis 3, dadurch gekennzeichnet, daß die zweite Einspannstelle (20) in der einen Bearbeitungsstation (A) vorzugsweise an einem nicht bearbeiteten Mittellager liegt.

5. Maschine nach einem der Ansprüche 1 bis 3, dadurch gekennzeichnet, daß die zweite Einspannstelle (21) in der anderen Bearbeitungsstation (B) an einem in der Bearbeitungsstation (A) bearbeiteten Mittellager liegt.

6. Maschine nach einem der Ansprüche 1 bis 5, dadurch gekennzeichnet, daß die konzentrisch oder exzentrisch zur Drehachse liegenden Rotationsflächen in beiden Bearbeitungsstationen (A, B) durch Einzelfräser, durch paarweise Fräser oder auch vollständig durch Satzfräser bearbeitet werden.

## Claims

1. Milling machine for machining bearings, particularly the centre bearings, lying concentrically and/or eccentrically to the axis of long and, particularly, more than 3-throw, crankshafts (17), which has two machining stations (A, B) in which two co-axially received and gripped crankshafts are machined, characterised in that one part of a crankshaft (17) is machined in the one machining station (A) and the remaining part of this crankshaft is machined in the other machining station (B) during a later time period in the working cycle, whilst at the same time the next following crankshaft is machined in the one station (A), and that, in addition to reception at its ends, each crankshaft (17) is gripped at a first gripping position (19) and, additionally, at least one second gripping position (20, 21).

2. Machine according to claim 1, characterised in that the first gripping position (19) is used for gripping the crankshaft in both machining stations (A, B) and preferably lies at least on one side cheek of a throw bearing.

3. Machine according to claim 2, characterised in that the side cheek has formations for adjusting the crankshaft (17).

4. Machine according to any of claims 1 to 3, characterised in that the second gripping position (20) in the one machining station (A) preferably lies on an un-worked centre bearing.

5. Machine according to any of claims 1 to 3, characterised in that the second gripping position (21) in the other machining station (B) lies on a centre bearing machined in the machining station (A).

6. Machine according to any of claims 1 to 5, characterised in that the rotational surfaces lying concentrically or eccentrically to the rotational axis in the two machining stations (A, B) are machined by single milling cutters, by milling cutters in pairs or also completely by ganged milling cutters.

## Revendications

1. Machine de fraisage pour l'usinage de paliers concentriques et/ou excentriques par rapport à l'axe de vilebrequins (17) longs, en particulier vilebrequins ayant plus de trois courses, et en particulier leur palier central, qui comprend deux stations d'usinage (A, B) dans lesquelles on usine deux vilebrequins reçus et serrés sur le même axe, caractérisée en ce que dans l'une des stations d'usinage (A), on usine une partie d'un vilebrequin (17) et dans l'autre (B) on usine ensuite l'autre partie de ce vilebrequin avec un décalage dans le temps par rapport au rythme de travail, tandis qu'en même temps on usine dans la première station (A) le vilebrequin suivant, et en ce que chaque vilebrequin (17) est serré, en plus de sa réception à ses extrémités, à un premier endroit de serrage (19) et additionnellement en au moins un deuxième endroit de serrage (20, 21).

2. Machine selon la revendication 1, caractérisé en ce que le premier endroit de serrage (19) est utilisé dans les deux stations d'usinage (A, B) pour serrer le vilebrequin et de préférence se trouve au moins sur une joue latérale d'un palier de levage.

3. Machine selon la revendication 2, caractérisé en ce que la joue latérale présente des fraisages permettant l'ajustage du vilebrequin (17).

4. Machine selon l'une des revendications 1 à 3, caractérisée en ce que le deuxième endroit de serrage (20) se trouve à la première station d'usinage (A), de préférence sur un palier central non traité.

5. Machine selon l'une des revendications 1 à 3, caractérisé en ce que le deuxième endroit de serrage (21) se trouve à la deuxième station d'usinage (B) sur un palier central usiné dans la station d'usinage (A).

6. Machine selon l'une des revendications 1 à 5, caractérisée en ce que les faces de rotation se trouvent concentriquement ou excentriquement par rapport à l'axe de rotation dans les deux stations d'usinage (A, B) sont usinées par des fraises individuelles, par des fraises disposées par paires ou bien également et complètement par les fraises d'un jeu de fraises.